# EUROPÄISCHE PATENTANMELDUNG

(11) **EP 2 395 300 A2**
(43) Veröffentlichungstag der Anmeldung: **14.12.2011**
(21) Anmeldenummer: 11169503.7
(22) Anmeldetag: 10.06.2011
(51) Int. Cl.: F24J 2/52, F16B 5/02

(54) **Dachbefestigung**

(30) Priorität: 10.06.2010 DE 202010005612 U; 15.04.2011 DE 202011000893 U
(71) Anmelder: Baur, Jan-Henrik, 90480 Nürnberg (DE)
(72) Erfinder: Baur, Jan-Henrik, 90480 Nürnberg (DE)
(74) Vertreter: Lösch, Christoph Ludwig Klaus

(57) **Zusammenfassung**

Die Erfindung betrifft eine Dachbefestigung für ein Dach mit einem trapezförmigen Dachprofil, mit einem Trapezelement mit einer Befestigungsbohrung (6) und mindestens einem Langloch (5) und mindestens einem Profilelement (7).

## Beschreibung

Die Erfindung betrifft eine Dachbefestigung für ein Dach mit einem trapezförmigen Dachprofil.

Der Erfindung liegt die Aufgabe zugrunde, eine Dachbefestigung für ein trapezförmiges Dachprofil anzubieten, das besonders flexibel anbringbar ist und zugleich ein Überbauen von auf dem Dach vorhandener Dachschrauben u. ä. erlaubt.

Die Aufgabe wird durch eine Dachbefestigung mit den Merkmalen des Schutzanspruches 1 gelöst. Vorteilhafte Ausführungsformen sind in den Unteransprüchen beschrieben.

Die erfindungsgemäße Dachbefestigung weist ein Trapezelement mit einer Befestigungsbohrung und mindestens einem Langloch sowie mindestens ein Profilelement auf. Vorteilhaft an dieser Erfindung ist, dass durch die Kombination des Trapezelements mit dem Profilelement, die Möglichkeit eröffnet wird, auf dem Dach vorhandener Dachschrauben, zu überbauen. Ferner ermöglicht das Profilelement eine besonders hohe Stabilität bei einer Befestigung an einem trapezförmigen Dachprofil bzw. an einem Dachaufbau. Das Profilelement weist weiterhin den Vorteil auf, dass zwischen Dachprofil und dem Trapezelement ein Abstand entstehen kann. Dieser Abstand kann als Zirkulationsmöglichkeit dienen oder auch in anderer Weise genutzt werden, beispielsweise als Kabelkanal.

In einer vorteilhaften Ausführungsform ist das Trapezelement als einstückiges, dreischenkliges Bauteil ausgebildet. Auf diese Weise besteht die Dachbefestigung nur aus zwei Bauteilen (dreischenkliges Bauteil und Profilelement), was den Fertigungsaufwand und die Anfälligkeit gegenüber Montagefehlern verringert.

In einer weiteren Ausführungsform besteht das Trapezelement aus einem ersten Winkelelement und einem zweiten Winkelelement mit jeweils mindestens einer Befestigungsbohrung und jeweils mindestens einem Langloch. In besonders vorteilhafter Weise wird hierbei das Trapezelement aus einem ersten Winkelelement und einem zweiten Winkelelement, welche jeweils als separates Bauteil ausgebildet sind, gebildet. Mit anderen Worten besteht in dieser Ausführungsform das Trapezelement aus zwei separaten Bauteilen. Jedes der Winkelelemente weist mindestens eine Befestigungsbohrung und mindestens ein Langloch auf. Ein Vorteil dieser Ausführungsform ist, dass durch die beiden Langlöcher an mindestens einer Fläche des ersten und/oder des zweiten Winkelelementes eine individuelle Anpassung an die jeweilige Breite der Trapezform des Dachprofils möglich ist. So kann der Anwender jederzeit die Winkelelemente an das Dachprofil anpassen, ohne dass ein neues Winkelelement bzw. Trapezelement nötig ist.

Die Befestigungsbohrung(en) dienen zur Anbringung von Befestigungselementen an dem Dachprofil, um somit die Winkelelemente bzw. das Trapezelement lösbar oder unlösbar mit dem jeweiligen Dachprofil zu verbinden.

Wird das Trapezelement aus zwei Winkelelementen gebildet, können Befestigungsbohrungen an einer am trapezförmigen Dachprofil zu befestigenden Winkelseite eines der Winkelelemente angeordnet sein. Vorteilhaft an dieser Ausführungsform ist, dass bereits Befestigungsbohrungen vorgegeben sind und nur noch ein Befestigungselement oder ein Verbindungselement in die Befestigungsbohrungen eingebracht werden muss. Somit müssen keine weiteren Bohrungen in das Winkelelement eingebracht werden, um das Winkelelement am Dachprofil zu befestigen. Zugleich wird eine besonders rutschsichere und damit auch dichte Verbindung zwischen Winkelelementen und Dachprofil erreicht. Ebenso schafft die Flexibilität der Langlöcher der Winkelelemente die Möglichkeit, eine genaue Anpassung an das Dachprofil zu erzielen, was eine Minimierung der Verformung des Dachprofils und eine Erhöhung der Dichtigkeit der Verbindung gegen Witterungseinflüsse nach sich zieht.

Das Profilelement kann eine Hutschiene oder ein U-Profil sein. Vorteilhaft an einer Hutschiene ist die besondere Stabilität, die diese aufweist. Durch die auf ein U-Profil aufgesetzten Seitenarme kann eine Hutschiene auf Flächen aufliegen und ermöglicht so eine vergrößerte Oberflächenauflage, die die Standhaftigkeit der Hutschiene auf dem Dach und/oder einem Dachaufbau verbessert. Ein U-Profil ist ebenfalls einsetzbar, da dieses kostengünstig in der Anschaffung ist. Das Profilelement kann z.B. zur Überbaubarkeit von Dachschrauben dienen. Ferner können die beiden Winkelelemente über ein derartiges Profilelement unter Einspannung am Dachaufbau befestigt werden.

Das Profilelement kann in seinem Mittenteil eine Bohrung aufweisen. Durch die Bohrung im Mittenteil des Profilelementes lässt sich das Profilelement mit Hilfe eines Verbindungselementes mit dem ersten und dem zweiten Winkelelement bzw. mit dem Trapezelement verbinden. Weiterhin besteht die Möglichkeit, das Profilelement mit seiner Bohrung im Mittenteil fest oder wieder lösbar an das Dachprofil und/oder an einen Dachaufbau zu befestigen. Ein zentrierter Aufbau der Elemente mit nur einem Verbindungselement erzeugt einen besonders günstigen Kraftverlauf.

Das erste Winkelelement und das zweite Winkelelement können durch ihre Langlöcher und durch die Bohrung des Profilelementes miteinander verbunden sein. Durch die Verbindung der einzelnen Elemente entsteht die Dachbefestigung, die auf ein trapezförmiges Dachprofil aufsetzbar ist. Die Verbindung zwischen dem ersten und dem zweiten Winkelelement und dem Profilelement wird durch ein Verbindungselement bewirkt. Das Verbindungselement kann dabei ein Bolzen, eine Schraube, ein Nagel oder dergleichen sein. Durch die Verbindung der beiden Winkelelemente und dem Profilelement kann eine Anpassung der Breite des trapezförmigen Dachprofils vorgenommen werden, indem das Verbindungselement entsprechend der Breite der Langlöcher der Winkelelemente verschoben wird, wodurch z.B. eine nicht-mittig auf dem Dachaufbau angebrachte Dachschraube entsprechend überbaut werden kann.

Die Langlöcher der Winkelelemente können mittig auf einer Fläche des jeweiligen Winkelelements angeordnet sein Durch die mittige Lage der Langlöcher auf dem Winkelelement wird bei einer Anordnung von zwei Winkelelementen übereinander (erstes und zweites Winkelelement und Profilelement) nur ein geringfügiger Platzverbrauch der Dachbefestigung eingeräumt. Das erste und zweite Winkelelement liegen schlüssig und kompatibel übereinander.

In einer weiteren Ausführungsform der Erfindung wird ein Dachaufbau auf die Dachbefestigung angebracht. Ferner ermöglicht es die Dachbefestigung einen Dachaufbau auf ein trapezförmiges Dachprofil anzubringen. Ein Dachaufbau kann u.a. ein Sonnenkollektor, eine Photovoltaikanlage, ein Kabelkanal oder auch ein Wasserspeicher, wie diese beispielsweise in den USA üblich sind, sein.

Weiterhin ist es auch möglich, den Dachaufbau über ein Zwischenelement (Adapter) mit der Dachbefestigung zu verbinden. Das Zwischenelement hat den Vorteil, eine genaue Einstellung des Dachaufbaus zu ermöglichen, wie beispielsweise bei Solar- oder Photovoltaikanlagen, die eine optimale Ausrichtung zur Sonne in einem bestimmten Winkel oder auch eine optimale Halterung an der Dachbefestigung benötigen. Das Zwischenelement kann ein Winkel oder ein weiteres Profilelement sein.

In einer bevorzugten Ausführungsform ist das Zwischenelement durch ein weiteres Profilelement mit der Dachbefestigung verbunden. Es ist aber auch möglich das Zwischenelement mit einem Dachaufbau zu verbinden und den Dachaufbau mit dem Zwischenelement an das Profilelement anzuschließen. Das weitere Profilelement dient hier zur Herstellung einer hohen Stabilität. Dachaufbauten, wie Solar-, Photovoltaikanlagen oder Wasserspeicher, sind hohen Belastungen ausgesetzt, wie Wind, Regen, Schnee oder sonstigen witterungsbedingten Einflüssen. Eine besonders hohe Stabilität von Dachaufbauten ist somit erforderlich.

In vorteilhafter Weise ist bei einer Befestigung des Profilelementes mit dem ersten Winkelelement und dem zweiten Winkelelement ein Verbindungselement in der Bohrung des Profilelementes und den Langlöchern der Winkelelemente einsetzbar. Das Verbindungselement dient zur Verbindung zwischen den zwei Winkelelementen und mindestens einem Profilelement. Das Verbindungselement kann eine Schraube, ein Nagel oder ein Bolzen sein.

Die Erfindung ist anhand von Ausführungsbeispielen in den Zeichnungsfiguren weiter erläutert. Es zeigen jeweils schematisch,
- Fig.1 1: eine Explosionsansicht einer ersten Ausführungsform der Dachbefestigung;
- Fig. 2: einen Schnitt der montierten Dachbefestigung aus Fig. 1;
- Fig.3: eine Explosionsansicht einer zweiten Ausführungsform der Dachbefestigung mit zusätzlichem Profilelement;
- Fig. 4: einen Schnitt der Dachbefestigung aus Fig. 3;
- Fig.5: eine Explosionsansicht einer dritten Ausführungsform der Dachbefestigung;
- Fig. 6: einen Schnitt der Dachbefestigung aus Fig. 5.

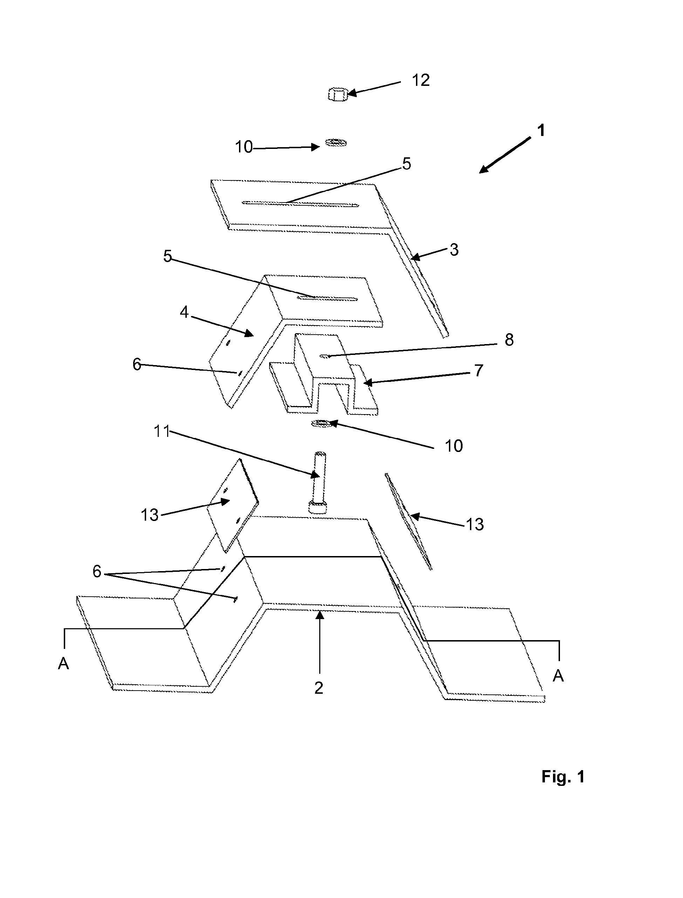

Die in den Figuren 1 bis 4 dargestellte Dachbefestigung 1 besteht aus einem ersten Winkelelement 3, einem zweiten Winkelelement 4 und einem Profilelement 7. Hierbei bilden das erste Winkelelement 3 und das zweite Winkelelement 4 das Trapezelement.

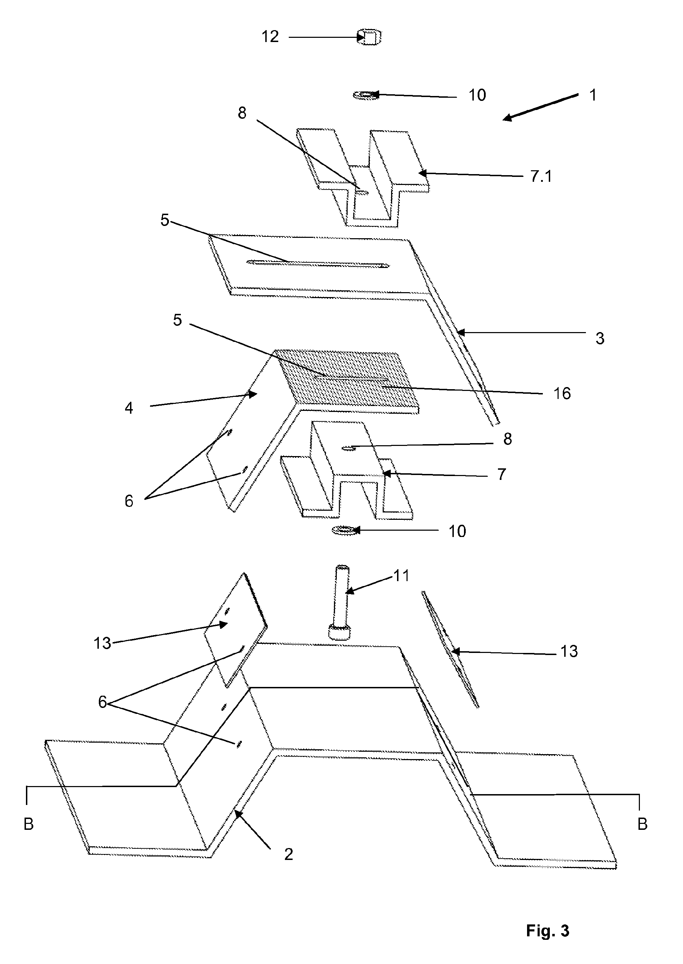

Fig. 1 zeigt eine Explosionsansicht der Dachbefestigung 1. Das trapezförmige Dachprofil 2 weist in dieser Darstellung Bohrungen 6 auf, die es erlauben, mindestens ein Winkelelement 3,4 aufzunehmen. Das Winkelelement 3,4 kann eine Riffelung 16 (vgl. Fig. 3 ― in Fig. 1 nicht abgebildet) aufweisen. Es ist aber auch möglich ein Unterlegelement 13 (z.B. ein Dichtgummi) einzubringen, welches zwischen Winkelelement 3,4 und dem trapezförmigen Dachprofil 2 einsetzbar ist. Das Unterlegelement 13 kann dabei ebenfalls Bohrungen aufweisen, die mit den Bohrungen 6 der Winkelelemente 3,4 und den Befestigungsbohrungen 6 des trapezförmigen Dachprofils 2 kompatibel sind. Letztere können auch durch selbstfurchende Schrauben erzeugt werden. Die Befestigungsbohrungen 6 des trapezförmigen Dachprofils 2 sind bei sich überlappenden trapezförmigen Dachprofilen 2 insbesondere im Überlappungsbereich der trapezförmigen Dachprofile 2 angebracht, wodurch eine besonders hohe Dichtigkeit der Dachbefestigung erreicht wird. Das Unterlegelement 13 dient zur Kraftübertragung eines Befestigungselementes und zur Vermeidung von Verformungen an der Dachbefestigung 1 und/oder an dem trapezförmigen Dachprofil 2. Das Verbindungselement 11 verbindet das Profilelement 7, die hier als Hutschiene dargestellt ist, mit dem zweiten Winkelelement 4 und dem ersten Winkelelement 3. Um einen niedrigen Aufbau der einzelnen Elemente der Dachbefestigung 1 zu erzielen, besteht die Möglichkeit, Senkschrauben als Verbindungselement 11 einzubringen. Zwischen Profilelement 7 und dem Dachprofil 2 kann auch z.B. zur Schonung des Dachprofils 2 ein Dichtungselement angebracht sein (nicht abgebildet). Dabei wird auf das Verbindungselement 11 eine Unterlegscheibe 10 aufgebracht und das Verbindungselement durch eine Bohrung 8 des Profilelements 7 hindurchgeführt. Ist das Profilelement 7 auf dem Verbindungselement 11 angeordnet, so wird das zweite Winkelelement 4 und danach das erste Winkelelement 3 durch ihre jeweiligen Langlöcher 5 auf dem Verbindungselement 11 angeordnet. In dieser Darstellung der Neuerung wird abschließend, nachdem das Profilelement 7 und die beiden Winkelelemente 3,4 auf dem Verbindungselement 11 angeordnet sind, eine weitere Unterlegscheibe 10 zur Kraftübertragung und zur Vorbeugung von Verformungen auf das Verbindungselement 11 aufgebracht und mit einer Schraubenmutter befestigt. Das Verbindungselement 11 ist in dieser Darstellung als Schraube bzw. als Bolzen ausgebildet und durch eine Schraubenmutter 12 befestigt. Die Winkelelemente 3,4 weisen an der Fläche, die an dem trapezförmigen Dachprofil 2 befestigt werden soll, zwei Befestigungsbohrungen 6 auf, die in ihrer Anordnung kompatibel zu den Bohrungen des Unterlegelements 13 und zu den Befestigungsbohrungen 6 des trapezförmigen Dachprofils 2 sind. Die Langlöcher 5 der Winkelelemente 3,4 sind an der jeweilig zweiten Fläche des Winkelelementes angeordnet. Die Langlöcher 5 der Winkelelemente 3,4 sowie die Bohrung 8 des Profilelements 7 sind in dieser Ausführungsform der Neuerung jeweils mittig im Profilelement 7 und/oder des Winkelelementes 3,4 eingebracht.

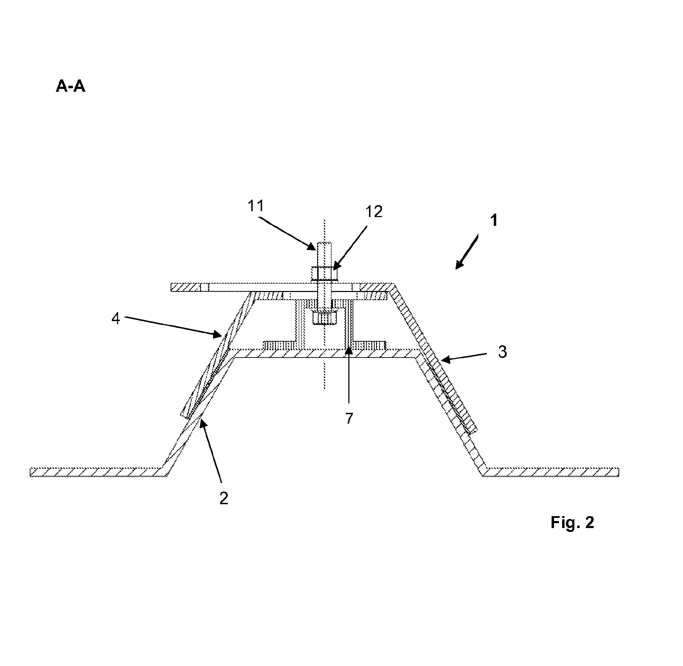

Fig. 2 ist eine Schnittansicht in einer montierten Ausführungsform von Fig. 1. Das Profilelement 7, hier wieder eine Hutschiene, liegt mit ihren Armen stabil auf dem trapezförmigen Dachprofil 2 auf. Die Hutschiene ist durch das Verbindungselement 11 mit dem ersten und dem zweiten Winkelelementen 3,4 verbunden. Am Verbindungselement 11 kann ein üblicher Winkel angebracht sein, an dem Aufbauten befestigt werden können (nicht abgebildet). Die Winkelelemente 3,4 wurden derart an dem trapezförmigen Dachprofil 2 angeordnet, dass sie sich ihrer Breite anpassen können. Dies wird durch die Langlöcher 5 erzielt, welche bei den Winkelelementen 3,4 eine Verschiebung erzielen kann und somit dem jeweiligen Dachprofil anpassbar ist. Das erste Winkelelement 3 ist in dieser Ausführungsform in der Fläche, in der sich das Langloch 5 befindet, länger ausgeführt. Es besteht auch die Möglichkeit, das erste und das zweite Winkelelement 3,4 gleichartig auszuformen. Das Verbindungselement 11, welches die Hutschiene und das erste und zweite Winkelelement 3,4 miteinander verbindet, schließt mit einer Schraubenmutter 12 die Verbindung ab.

Eine Explosionsansicht einer weiteren Ausführungsform der Neuerung ist in Fig. 3 dargestellt. Die Darstellung ist ähnlich Fig. 1, jedoch ist in dieser Ausführungsform ein weiteres Profilelement 7.1 angeordnet. Das Profilelement 7.1 ist als Hutschiene ausgeformt. Die Hutschiene wird ebenfalls auf dem Verbindungselement 11 angeordnet. Auf das Verbindungselement 11 wird eine Unterlegscheibe 10 aufgebracht, danach das Profilelement 7, das zweite Winkelelement 4 und das erste Winkelelement 3. Die Dachbefestigung 1 wird komplettiert durch die Anordnung eines weiteren Profilelements 7.1, die wie hier dargestellt eine Hutschiene sein kann. Zur Befestigung der einzelnen Elemente ist eine weitere Unterlegscheibe 10 und eine Schraubenmutter 12 auf dem Verbindungselement 11 anbringbar. Die Unterlegscheiben 10 können auch Sprengringe sein. Ebenfalls ist es möglich, dass die Schraubenmutter mit einer Verzahnung ausgeführt ist. An das weitere Profilelement 7.1 können mögliche Dachaufbauten 14, wie Solarmodule, Photovoltaikanlagen oder ähnliches angeordnet werden, dies hat den Vorteil, dass konstruktiv übliche Zwischenelemente 9, wie Tragschienen überflüssig werden. In dieser Ausführungsform der Erfindung ist eine Riffelung 16 des zweiten Winkelelementes 4 dargestellt. Die Riffelung 16 kann ganz oder teilweise auf den einzelnen Flächen der Winkelelemente 3, 4 angebracht sein. Die Riffelung der Oberfläche ermöglicht, dass bei einer Verbindung der einzelnen Elemente, ein Verrutschen oder ein Verschieben der Winkelelemente 3,4 zueinander vermeidbar ist, da sich die Oberflächen der Winkelelemente 3,4 ineinander verhaken und so ein weiteres Verschieben erschwert wird.

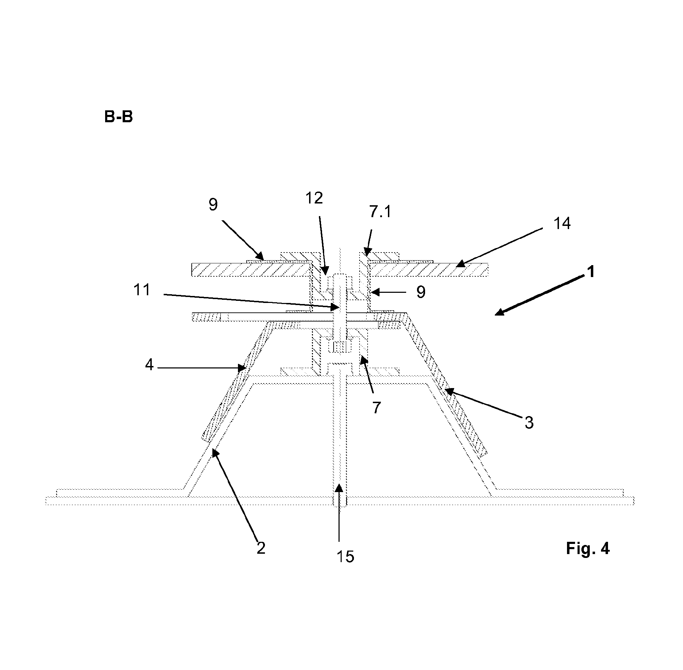

Fig. 4 zeigt einen Schnitt einer montierten Dachbefestigung, wie in Fig. 3 dargestellt. Zusätzlich ist in dieser Darstellung ein Dachaufbau 14 dargestellt, der mit Hilfe eines weiteren Profilelements 7.1 und einem Zwischenelement 9 mit der Dachbefestigung 1 verbunden ist. Weiterhin ist in dieser Darstellung das trapezförmige Dachprofil 2 mit einem zweiten Verbindungselement 15 (z.B. einer im Dachprofil 2 schon vorhandenen Dachschraube) an das Dach befestigt, so dass das trapezförmige Dachprofil 2 an Stabilität gewinnt. Über dem zweiten Verbindungselement 15 ist das Profilelement 7 angeordnet, das mit ihrer Öffnung das zweite Verbindungselement 15 überdeckt. Damit entsteht eine Überbaumöglichkeit vorhandener Dachschrauben durch die neuerungsgemäße Dachbefestigung 1. Ein erstes Verbindungelement 11 trägt das Profilelement 7, sowie das zweite und das erste Winkelelement 3,4. Des Weiteren ist an dem Verbindungselement 11 ein weiteres Profilelement 7.1 aufgesteckt, das eine Verbindung zwischen Dachaufbau 14 und Dachbefestigung 1 herstellt. Zur weiteren Stabilisierung der Dachbefestigung und des Dachaufbaus 14 auf das trapezförmige Dachprofil 2 ist an beiden Seiten des Profilelementes 7.1 ein Zwischenelement 9 angebracht. Das Zwischenelement 9 ist in dieser Ausführungsform als U-Profilschiene dargestellt, es ist aber auch möglich, das Zwischenelement als einfache Schiene auszubilden oder in sonstiger Art und Weise als Befestigungselement und/oder als Verstärkungselement auszuformen.

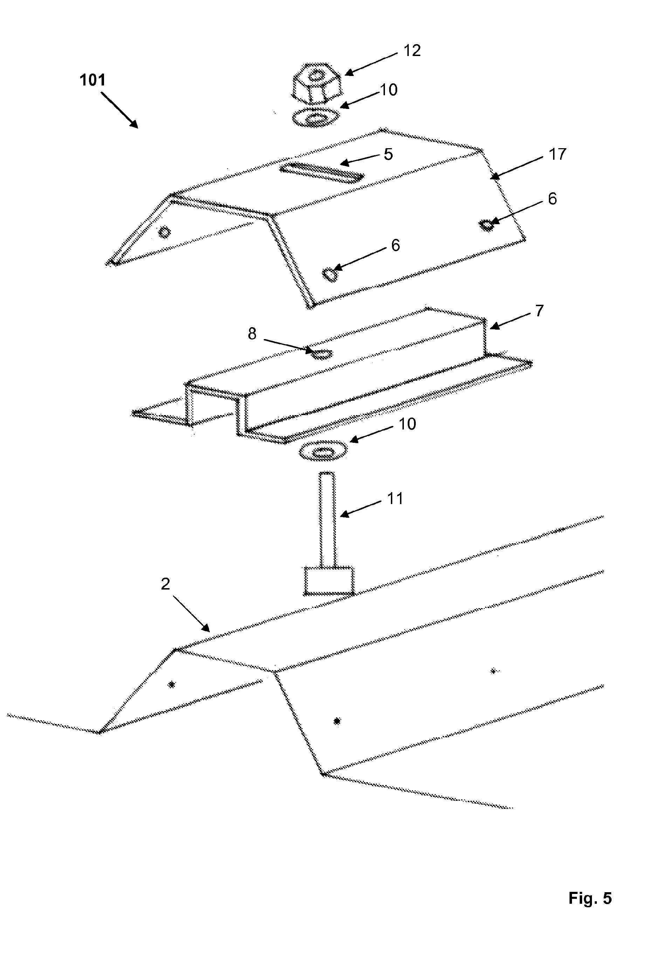

Die in den Figuren 5 bis 6 dargestellte Dachbefestigung 101 unterscheidet sich von der in den Figuren 1 bis 4 dargestellten Ausführungsformen durch das anders ausgestaltete Trapezelement. Während in der ersten und zweiten Ausführungsform das Trapezelement aus dem ersten Winkelelement 3 und dem zweiten Winkelelement 4 gebildet wird, besteht das Trapezelement in der dritten Ausführungsform aus einem einstückigen, dreischenkligen Bauteil 17. Die restlichen Bauteile unterscheiden sich nicht voneinander, sodass auf die entsprechende Beschreibung zu den Figuren 1 bis 4 verwiesen werden kann.

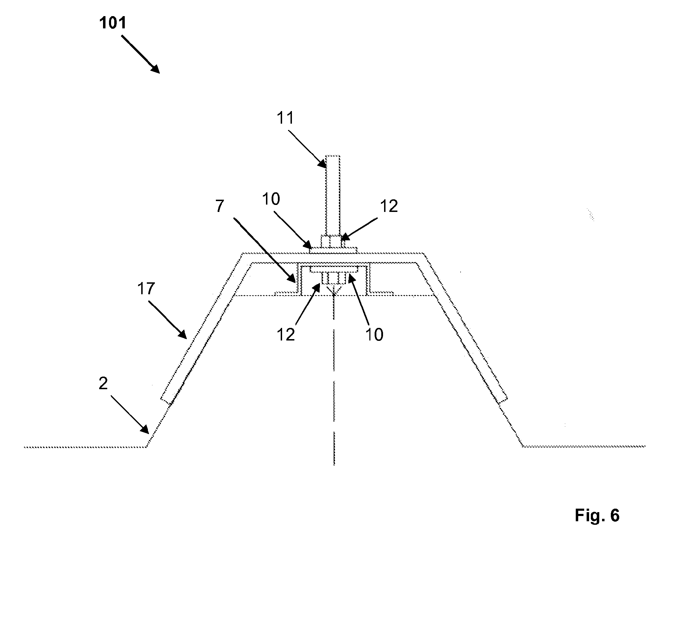

Fig. 5 zeigt eine Explosionsansicht der Dachbefestigung 101. Fig. 6 zeigt ein Schnittdarstellung entlang der Längsachse des Dachprofils 2. Die Dachbefestigung 101 weist ein dreischenkliges Bauteil 17 und ein Profilelement 7 auf. Das dreischenklige Bauteil 17 besitzt ein Langloch 5 und mehrere Befestigungsbohrungen 6. Das Profilelement 7 weist eine Bohrung 8 auf. Das dreischenklige Bauteil 17 und das Profilelement 7 sind durch ein Verbindungselement 11, welches in die Bohrung 8 und das Langloch 5 eingebracht ist, miteinander verbunden. Im vorliegenden Ausführungsbeispiel ist das Verbindungselement 11 als Schraube ausgebildet, die mit Unterlegscheiben 10 und einer Schraubenmutter versehen ist.

### BEZUGSZEICHENLISTE

- 1, 101: Dachbefestigung
- 2: trapezförmiges Dachprofil
- 3: erstes Winkelelement
- 4: zweites Winkelelement
- 5: Langloch
- 6: Befestigungsbohrung / Befestigungsöffnung
- 7, 7.1: Profilelement
- 8: Bohrung
- 9: Zwischenelement
- 10: Unterlegscheibe
- 11: Verbindungselement
- 12: Schraubenmutter
- 13: Unterlegelement (z.B. Dichtgummi)
- 14: Dachaufbau (z.B. Glas mit Solarzellen)
- 15: zweites Verbindungselement (z.B. Dachschraube)
- 16: Riffelung
- 17: dreischenkliges Bauteil

## Patentansprüche

1. Dachbefestigung für ein Dach mit einem trapezförmigen Dachprofil (2), mit
- einem Trapezelement mit einer Befestigungsbohrung (6) und mindestens einem Langloch (5) und
- mindestens einem Profilelement (7).

2. Dachbefestigung nach Anspruch 1, wobei das Trapezelement als ein einstückiges, dreischenkliges Bauteil (17) ausgebildet ist.

3. Dachbefestigung nach Anspruch 1, wobei das Trapezelement mit einer Befestigungsbohrung (6) und mindestens einem Langloch (5) als ein erstes Winkelelement (3) und ein zweites Winkelelement (4) mit jeweils mindestens einer Befestigungsbohrung (6) und jeweils mindestens einem Langloch (5) ausgebildet ist.

4. Dachbefestigung nach Anspruch 3, wobei das erste Winkelelement (3) und das zweiten Winkelelement (4) als jeweils separates Bauteil ausgebildet sind.

5. Dachbefestigung nach einem der Ansprüche 3 oder 4, wobei mindestens eines der Winkelelemente (3, 4) eine eine Riffelung (16) aufweisende Oberfläche besitzt.

6. Dachbefestigung nach einem der vorhergehenden Ansprüche, wobei die mindestens eine Befestigungsbohrung (6) an einer am trapezförmigen Dachprofil (2) zu befestigenden Winkelseite des Trapezelementes angeordnet ist.

7. Dachbefestigung nach einem der vorhergehenden Ansprüche, wobei das Profilelement (7) eine Hutprofilschiene oder ein U-Profil ist.

8. Dachbefestigung nach einem der vorhergehenden Ansprüche, wobei das Profilelement (7) in seinem Mittenteil eine Bohrung (8) aufweist.

9. Dachbefestigung nach Anspruch 7, soweit rückbezogen auf Anspruch 2, wobei das dreischenklige Bauteil (17) durch ein in das Langloch (5) und die Bohrung (8) des Profilelements (7) eingebrachtes Verbindungselement (11) verbunden sind.

10. Dachbefestigung nach Anspruch 8, soweit rückbezogen auf Anspruch 3, wobei das erste Winkelelement (3) und das zweite Winkelelement (4) durch ein in die jeweiligen Langlöcher (5) und die Bohrung (8) des Profilelements (7) eingebrachtes Verbindungselement (11) verbunden sind.

11. Dachbefestigung nach Anspruch 10, wobei die Langlöcher (5) jeweils mittig auf der Fläche der Winkelelemente (3,4) angeordnet sind.

12. Dachbefestigung nach einem der vorhergehenden Ansprüche, wobei auf die Dachbefestigung (1, 101) ein Dachaufbau (14) angebracht ist.

13. Dachbefestigung nach Anspruch 12, wobei der Dachaufbau (14) mit einem Zwischenelement (9) mit der Dachbefestigung (1, 101) verbunden ist.

14. Dachbefestigung nach Anspruch 12 oder 13, wobei das Zwischenelement (9) durch ein weiteres Profilelement (7.1) mit der Dachbefestigung (1, 101) verbindbar ist.

15. Dachbefestigung nach einem der vorhergehenden Ansprüche, wobei zwischen dem Trapezelement und dem Dachprofil (2) ein Unterlegelement (13), insbesondere ein Dichtgummi, angeordnet ist.
